# EUROPEAN PATENT SPECIFICATION

(11) **EP 1 676 351 B1**
(45) Date of publication and mention of the grant of the patent: **05.12.2007**
(21) Application number: 04789670.9
(22) Date of filing: 21.10.2004
(51) Int. Cl.: H02K 1/14, H02K 33/16

(54) **ANNULAR STACK OF LAMINATION ELEMENTS**
RINGFÖRMIGER STAPEL VON GESCHICHTETEN BLECHEN
EMPILEMENT ANNULAIRE DE TOLES

(30) Priority: 23.10.2003 BR 0304040
(43) Date of publication of application: 05.07.2006
(73) Proprietor: WHIRLPOOL S.A., 04578-000 São Paulo SP (BR)
(72) Inventor: STARKE, Orlando, 89218-590 Joinville - SC (BR); MORRONE, Rogério Ribeiro, 89204-270 Joinville - SC (BR)
(74) Representative: Geyer, Werner
(86) International application number: PCT/BR2004/000205
(87) International publication number: WO 2005/041386

(56) References cited:
- EP-A1- 1 315 275
- WO-A1-20/04006413
- DE-A1- 10 156 298
- US-A- 5 318 412
- US-A- 5 945 748

## Description

### Field of the Invention

The present invention refers to the configuration of lamination elements which form an internal annular stack designed to carry the coil of a linear motor.

### Background of the Invention

In the manufacture of a hermetic compressor of refrigeration with a linear motor there are several components which form the compressor, and one of them is the linear motor. This type of motor is composed of an annular stack of metallic laminations of the stator, around which is wound a copper wire, forming the induction coil of the linear motor.

The linear motor further presents another assembly of metallic laminations which also form a radial stack, denominated external annular stack and which defines, with the stator, an annular space within which moves the magnetic impeller, whose function is to produce the linear movement of the piston of the compressor, so that said piston can perform the compression operation within a cylinder of the compressor.

There are known processes which define configurations for a linear stator by using entire laminations in the manufacture of linear stators with an axisymmetric topology, presenting "C" or "U" shaped laminations, or those in the form of daisies, carrying magnets in the movable part (US4602174, US4346318, US4349757, US4454426, US4623808, US5945748). Such solutions present several difficulties regarding manufacturing aspects, such as: lodging the coil in the annular lamination structure; insulating the coil from the lamination structure, in accordance with international electric insulation rules; fixation of the coil and/or the coil windings, which must be rigidly affixed taking into account the high forces applied thereon due to high acceleration resulting from the reciprocation presenting the power system frequency.

In the Brazilian co-pending patent document PI0203507.3 of the same applicant, the construction of the linear motor presents two-piece laminations, with their equally shaped lamination portions being laterally seated in relation to each other, in order to define respective lamination stack portions to be affixed to each other to form the stator.

In this construction, one of the lamination portions is provided with a recess in a respective seating region to receive a complementary projection defined in the other lamination portion, upon fixation of the stack portions to form the stator. While this solution overcomes the prior art difficulties described above, the fixation of the lamination portions that form each metallic lamination, when this fixation is made through a bead of adhesive applied between two complementary lamination portions, provides a region of marginal resistance in the formed lamination, not providing sufficient strength against traction and shearing forces and allowing failures to occur during operation of the motor by displacement of the lamination portions.

US5318412 discloses a construction of a linear motor provided with a stator constructed of two halves, being laterally seated in relation to each other, in order to be affixed to each other to form the stator. In this construction, one of the halves is provided with a recess in a respective seating region to receive a complementary projection defined in the other of the halves, both halves being fixed to each other through screws. Said prior art solution presents a magnetic core of the motor as a massive steel, which allows that the fixation between the halves is obtained through screws. However, said fixation solution does not apply to the motor constructions as that presented at PI0203507.3, in which the displacer (which should be formed by magnetic elements) oscillates in the external diameter of the stator of the motor.

### Objects of the Invention

Thus, it is an object of the present invention to provide a lamination stack for forming the stator of a linear motor, which facilitates the assembly of the stator, particularly the coil therewithin, allowing a maximized winding of copper wires to be obtained in the interior of said stator, further allowing the fixation of the metallic laminations of the formed lamination stack to present sufficient strength to resist the forces applied to the stator during operation of the linear motor.

Another object of the present invention is to provide a lamination stack as mentioned above, which allows compensating for the magnetic losses generated by the lamination being divided in two portions and by the additional gap generated by the fixation of said portions through adhesive.

### Summary of the Invention

These and other objects are attained by an annular stack of lamination elements for forming the stator of a linear electric motor as defined in independent claim 1.

The invention presents, besides the advantages of the known conventional prior art constructions, which are: the possibility of winding the copper wire that forms the coil in conventional machines; obtaining a large amount of windings of the copper wire around the coil; complying with the requirements for the electric insulation of said coil, according to international electric safety rules and with said insulation being achieved through a conventional process; and reliability of the fixation of the copper windings of the coil as a whole, the additional advantages of: presenting better condition for resisting traction and shearing forces; and compensating for the magnetic losses resulting from the fixation provided between the lamination portions upon formation of the annular stack of two-piece laminations of the stator.

Advantageous embodiments of the invention are set forth in the dependent claims.

### Brief Description of the Drawings

The invention will be described below, based on the enclosed drawings, in which:
Figure 1 is a longitudinal sectional view of a linear motor illustrating a known stator construction having an annular stack of laminations formed by lamination portions;

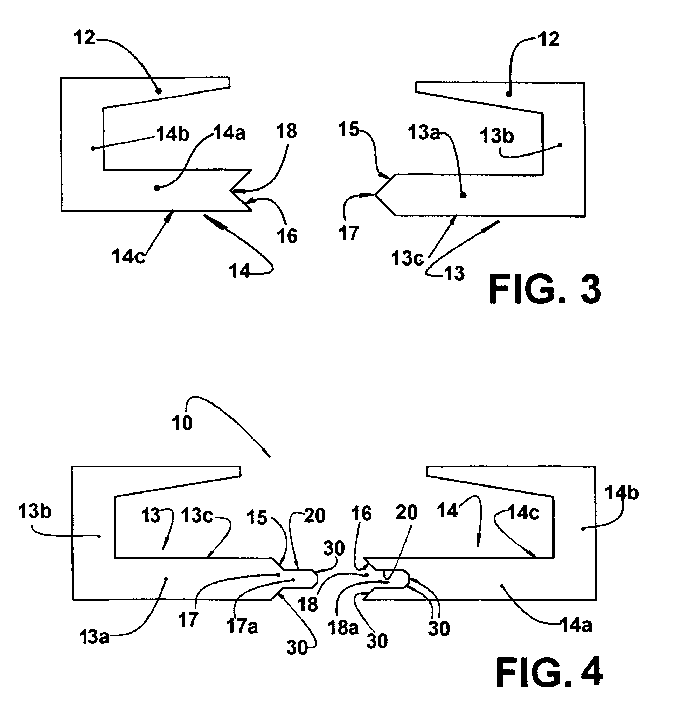

Figure 2 is a lateral view of a single-piece lamination of the type used in the annular stack of laminations illustrated in figure 1;
Figure 3 is a lateral view of two portions of a lamination of an annular lamination stack formed according to the prior art; and
Figure 4 is a lateral view of two portions of a lamination of an annular lamination stack formed according to the present invention.

### Detailed Description of the Invention

The present invention is applied to the construction of the laminations of a stack of laminations which form the stator of a linear electric motor, generally used in a hermetic compressor of refrigeration systems, said compressor comprising, inside a shell (not illustrated), a motor-compressor unit including a non-resonant assembly formed by a linear motor and a cylinder 1, and a resonant assembly formed by a piston 2 reciprocating inside the cylinder 1, and an actuating means 3 external to the cylinder 1 and which carries a magnet 4 to be axially impelled upon energization of the linear motor, said actuating means 3 operatively coupling the piston 2 to the linear motor.

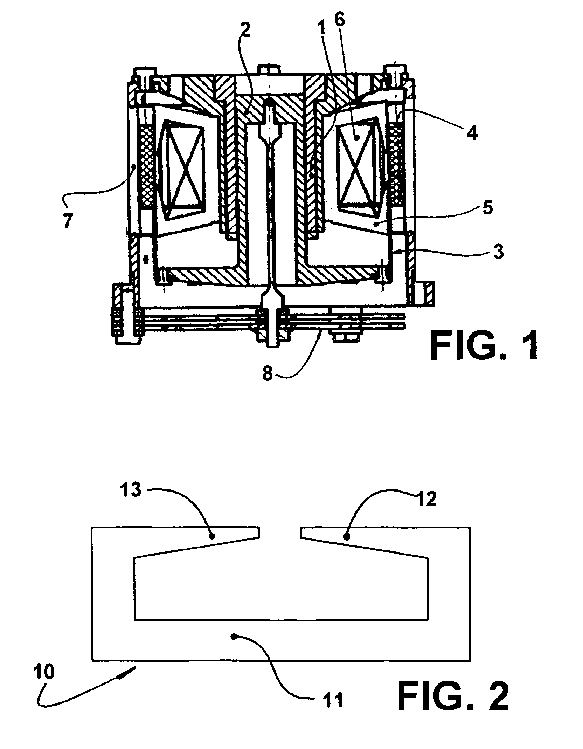

As illustrated in the enclosed figure 1, the linear motor is mounted around the cylinder 1 and the piston 2 and comprises an internal annular stack 5, which is formed by a plurality of metallic lamination elements 10 laterally seated in relation to each other, and in which is mounted a tubular coil 6; and an external annular stack 7 formed by a plurality of external metallic laminations;

Each internal and external annular stack is formed by the mutual lateral seating of the metallic laminations which are usually made of steel, defining a cylindrical internal surface for mounting, for example the internal annular stack 5, around the cylinder 1.

The external annular stack 7 forms, with the stator, an annular space within which moves the actuating means 3, whose function is to produce the linear movement of the piston 2 inside the cylinder 1.

The compressor further includes conventional resonant spring means 8, mounted in constant compression to the resonant assembly and to the non-resonant assembly and which are resiliently and axially deformable toward the displacement of the piston 2.

Each lamination element 10 presents an internal axial extension 11 and two external axial extensions 12 defining, as illustrated, a trapezoidal profile for the lamination element 10, with the smaller base coinciding with the internal axial extension 11.

Each lamination element 10 is defined by two lamination portions 13, 14, at least one of them having at least part of the internal axial extension 11 of the respective lamination element 10, said lamination portions 13, 14 being affixed to each other during the formation of the stator, as described in the co-pending Brazilian patent application PI0203507.3, in order to complete the respective lamination element 10.

Each lamination element 10 presents a respective lamination portion 13, 14 having its respective internal axial extension 13a, 14a carrying a corresponding radial extension 13b, 14b.

In order to mutually affix the lamination portions 13, 14 or forming each lamination element 10, they are seated to each other through a respective seating region 15, 16, for example by mutually fitting said seating regions 15, 16, one of the latter presenting at least one recess 18 to be fitted in a corresponding projection 17 provided in the other seating region 15, 16 when the annular stack is mounted.

Each lamination portion 13, 14, presents a respective radially internal edge 13c, 14c to be mutually and laterally seated side by side with a radially internal edge 13c, 14c of an adjacent lamination portion 13, 14, defining a rectilinear alignment of each plurality of lamination portions 13, 14.

After the rectilinear alignment of each plurality of lamination portions 13, 14, these are retained to each other by the application of a fixation layer, for example in the form of an adhesive bead, in the seating regions 15, 16 of said lamination portions 13, 14.

According to the present invention, each seating region 15, 16 has its contour comprising at least one first lamination edge portion 20 and at least one second lamination edge portion 30, the first lamination edge portion 20 being disposed according to an alignment that is at least substantially parallel to the axial alignment of the lamination portions 13, 14 and the second lamination edge portion 30 being united to the first lamination edge portion 20 forming an angle with the latter, a first lamination edge portion 20 of a lamination portion 13, 14 being seated and affixed to a first lamination edge portion 20 of the other lamination portion 13, 14 upon the formation of the respective lamination element 10, and a second lamination edge portion 30 of a lamination portion 13, 14 being affixed to a second lamination edge portion 30 of the other lamination portion 13, 14 upon the formation of the respective lamination element 10.

With this construction, the seating regions 15, 16 of each lamination portion 13, 14 define, each one, at least one mounting and fixation region parallel to the radially internal edges 13c, 14c of the lamination portions 13, 14, in which the shearing forces increase the resistance of the adhesive that secures the lamination portions 13, 14 together in relation to the regions under traction forces.

According to the present solution, each seating region 15, 16 may present at least one of the parts of recess 18 and projection 17, at least one first and one second lamination edge portion 20, 30 defining at least part of a recess 18 in one of the seating regions 15, 16 and part of a projection 17 in the other seating region 15, 16. In a variation of this construction, at least one first and one second lamination edge portion 20, 30 define at least one recess 18 and at least one projection 17.

Since the increase of the shearing region between the parts of recess 18 and the respective projection 17 to be mutually affixed is a function of the first lamination edge portions 20, the second lamination edge portions 30 may not have mutually complementary contours so as to be solely attached to each other, without necessarily being mutually seated, the distance between the second lamination edge portions 30 under fixation being filled by adhesive.

According to one way of carrying out the present invention, at least one recess 18 of a seating region 16 presents at least one first and one second lamination edge portion 20, 30 which are respectively seated and affixed to a first and to a second lamination edge portion 20, 30 of a projection 17 of the other seating region 15. In this solution, the parts of recess 18 and projection 17 present mutually complementary contours, thus reducing the amount of adhesive for the mutual fixation thereof and consequently reducing the magnetic losses caused by action of the air gap formed by the adhesive.

According to the present invention, a seating region 16 presents at least one recess 18 which is open to the exterior of the respective lamination portion 14 and an additional recess 18a which is open to the interior of the recess 18, the other seating region 15 being provided with at least one projection 17 and with an additional projection 17a, each being respectively fitted in the recess 18 and in the additional recess 18a, these being provided in the other seating region 16, each recess 18 and additional recess 18a and each projection 17 and additional projection 17a presenting a respective axis, said axes being, for example, disposed according to the same axial alignment for assembly of the lamination portions 13, 14.

In a variant of this construction, at least one recess 18 and an additional recess 18a and corresponding projection 17 and additional projection 17a are coaxial and, for example, aligned with the axis of the respective lamination portion 13, 14.

According to the illustrations, a seating region 16 presents a respective recess 18 and an additional recess 18a to be seated and retained to a projection 17 and to an additional projection 17a of the other seating region 15, said recess 18 and projection 17 occupying the whole width of the corresponding lamination portion 13, 14. In this construction, the additional recess 18a and the additional projection 17a present only one second lamination edge portion 30, transversal to the respective two first lamination edge portions 20.

In a constructive variation of the present invention, the additional recess 18a has the two first lamination edge portions 20 united by at least one second lamination edge portion 30, the additional projection 17a having two first lamination edge portions 20 which are united to each other by at least one second lamination edge portion 30.

In another constructive option, the recess 18 and the projection 17 of each respective seating region 15, 16 occupy only part of the width of the corresponding lamination portion 13, 14, for example only the median region of the width of the corresponding lamination portion 13, 14.

In order to guide and limit the mutual introduction of the lamination portions 13, 14 when each lamination element 10 is mounted, at least one of the seating regions 15 of one of the lamination portions 13 is provided with at least one of the parts defined by a stop portion and an abut portion and by a guide means and a guide following means, the other of said parts being provided in the other seating region 15, 16.

According to the present invention, a second lamination edge portion 30 of one of the seating regions 15, 16 defines a stop portion, another second lamination edge portion 30 of the seating region 16 of the other lamination portion 14 defining an abut portion to be seated against said stop portion upon fixation of the lamination portions 13, 14.

In a specific construction, said lamination edge portions 30 of the stop and abut portions define at least part of the respective recess 18 and projection 17.

Similarly, a second lamination edge portion 30 of a seating region 15 of one of the lamination portions 13 defines a guide means, another second lamination edge portion 30 of the seating region 16 of the other lamination portion 14 defining a guide following means to be fitted in said guide means upon fixation of the lamination portions 13, 14. In a specific construction of the present solution, the second lamination edge portions 30 of the guide means and guide following means define at least part of the respective recess 18 and projection 17.

With the solution of the present invention, the mutual fixation of the lamination portions 13, 14 for forming each lamination element 10 presents greater resistance, as a function of the provision of regions with shearing forces and as a function of an increase of the total bonding area in each seating region 15, 16 between the lamination portions 13, 14, such area increase between the lamination portions 13, 14 reducing the magnetic losses resulting from division of the lamination 10 and from the air gap effect generated by the adhesive thickness, the smallest the mutual fixation area of the seating regions, and the more the latter are orthogonal to the axis of the respective lamination portions 13, 14. The gap resulting from the adhesive thickness is compensated by increasing the useful contact area, for example promoted by the larger extension in the joining region, particularly by the illustrated shape of the lamination portions 13, 14.

Besides these advantages, the present solution further allows the lamination portions 13, 14 to be fitted more easily, due to the provision of guide means and guide following means in the recess 18 and corresponding projection 17.

## Claims

1. An annular stack of lamination elements for forming the stator of a linear electric motor having a tubular coil (6) mounted in the annular stack of lamination elements (10), each lamination element (10) having two external axial extensions (12) and an internal axial extension (11) defined by two lamination portions (13, 14) to be affixed to each other in order to complete the respective lamination element (10), each lamination portion (13, 14) presenting a respective seating region (15, 16) having at least one recess (18) to fit and retain a respective projection (17) provided in the seating region (15, 16) of the other lamination portion (13, 14), wherein each seating region (15, 16) has its contour comprising at least one first and at least one second lamination edge portion (20, 30), the first lamination edge portion (20) being disposed according to an alignment which is at least substantially parallel to the axial alignment of the lamination portions (13, 14) and the second lamination edge portion (30) being united to the first lamination edge portion (20) forming an angle with the latter, a first lamination edge portion (20) of a lamination portion (13, 14) being seated and affixed to a first lamination edge portion (20) of the other lamination portion (13, 14) upon formation of the respective lamination element (10), and a second lamination edge portion (30) of a lamination portion (13, 14) being affixed to a second lamination edge portion (30) of the other lamination portion (13, 14) upon formation of the respective lamination element (10), the seating region (16) presenting at least one recess (18) opened to the exterior of the respective lamination portion (14) and an additional recess (18a) opened to the interior of the recess (18), the other seating region (15) being provided with a projection (17) and with an additional projection (17a) to be respectively fitted in the recess (18) and in the additional recess (18a) which are provided in the other seating region (16).

2. The stack as set forth in claim 1, **characterized in that** the recess (18) and the additional recess (18a) have their axes disposed according to the same axial alignment for assembly of the lamination portions (13, 14).

3. The stack as set forth in claim 2, **characterized in that** at least one recess (18) and respective additional recess (18a) are coaxial.

4. The stack as set forth in claim 1, **characterized in that** the additional recess (18a) has two first lamination edge portions (20) united by at least one second lamination edge portion (30), the additional projection (17a) having two first lamination edge portions (20) united to each other by at least one second lamination edge portion (30).

5. The stack as set forth in claim 1, **characterized in that** a second lamination edge portion (30) of a seating region (15) of one of the lamination portions (13) defines a stop portion and another second lamination edge portion (30) of the seating region (16) of the other lamination portion (14) defines an abut portion to be seated against said stop portion upon the fixation of the lamination portions (13, 14).

6. The stack as set forth in claim 5, **characterized in that** the second lamination edge portions (30) of the stop and abut portions define at least part of the respective recess (18) and projection (17).

7. The stack as set forth in claim 1, **characterized in that** a second lamination edge portion (30) of a seating region (15) of one of the lamination portions (13) defines a guide means and another second lamination edge portion (30) of the seating region (16) of the other lamination portion (14) defines a guide following means to be fitted in said guide means upon fixation of the lamination portions (13, 14).

8. The stack as set forth in claim 7, **characterized in that** the second lamination edge portions (30) of the guide means and guide following means define at least part of the respective recess (18) and projection (17).

9. The stack as set forth in claim 1, **characterized in that** the recess (18) and the projection (17) of each respective seating region (15, 16) occupy only part of the width of the corresponding lamination portion (13, 14).

10. The stack as set forth in claim 1, **characterized in that** the seating regions (15, 16) of two lamination portions (13, 14) to be mutually affixed receive a fixation means.

11. The stack as set forth in claim 10, **characterized in that** the fixation means is defined by an adhesive material.

## Patentansprüche

1. Ringförmige Schichtanordnung von Lamellenelementen zur Ausbildung des Stators eines elektrischen Linearmotors, mit einer rohrförmigen Spule (6), die in der ringförmigen Schichtanordnung aus Lamellenelementen (10) angebracht ist, wobei jedes Lamellenelement (10) zwei äußere axiale Fortsätze (12) und einen inneren axialen Fortsatz (11) aufweist, der durch zwei Lamellenabschnitte (13, 14) festgelegt ist, welche aneinander zu befestigen sind, um das jeweilige Lamellenelement (10) fertigzustellen, wobei jeder Lamellenabschnitt (13, 14) einen entsprechenden Sitzbereich (15, 16) mit mindestens einer Ausnehmung (18) aufweist, um einen entsprechenden Vorsprung (17), der im Sitzbereich (15, 16) des anderen Lamellenabschnittes (13, 14) vorgesehen ist, einzufügen und zu halten, wobei die Kontur jedes Sitzbereiches (15, 16) mindestens einen ersten und mindestens einen zweiten Lamellenrandabschnitt (20, 30) aufweist, wobei der erste Lamellenrandabschnitt (20) entsprechend einer Ausrichtung angeordnet ist, die zumindest im wesentlichen parallel zur axialen Ausrichtung der Lamellenabschnitte (13, 14) ist, und der zweite Lamellenrandabschnitt (30) mit dem ersten Lamellenrandabschnitt (20) unter Bildung eines Winkels mit letzterem zusammengefügt ist, wobei ein erster Lamellenrandabschnitt (20) eines Lamellenabschnittes (13, 14) nach Bildung des entsprechenden Lamellenelementes (10) an einem ersten Lamellenrandabschnitt (20) des anderen Lamellenabschnittes (13, 14) sitzt und befestigt ist und ein zweiter Lamellenrandabschnitt (30) eines Lamellenabschnittes (13, 14) nach Bildung des entsprechenden Lamellenelementes (20) an einem zweiten Lamellenrandabschnitt (30) des anderen Lamellenabschnittes (13, 14) befestigt ist, wobei der Sitzbereich (16) mindestens eine zur Außenseite des entsprechenden Lamellenabschnittes (14) hin geöffnete Ausnehmung (18) und eine zur Innenseite der Ausnehmung (18) hin geöffnete, zusätzliche Ausnehmung (18a) aufweist, und der andere Sitzbereich (15) mit einem Vorsprung (17) und mit einem zusätzlichen Vorsprung (17a) versehen ist, die jeweils in der Ausnehmung (18) sowie in der zusätzlichen Ausnehmung (18a) sitzen, welche im anderen Sitzbereich (16) vorgesehen sind.

2. Schichtanordnung nach Anspruch 1, **dadurch gekennzeichnet, daß** die Achsen der Ausnehmung (18) und der zusätzlichen Ausnehmung (18a) mit gleicher Achsausrichtung zum Zusammenfügen der Lamellenabschnitte (13, 14) angeordnet sind.

3. Schichtanordnung nach Anspruch 2, **dadurch gekennzeichnet, daß** mindestens eine Ausnehmung (18) und eine entsprechende zusätzliche Ausnehmung (18a) koaxial verlaufen.

4. Schichtanordnung nach Anspruch 1, **dadurch gekennzeichnet, daß** die zusätzliche Ausnehmung (18a) zwei erste Lamellenrandabschnitte (20) aufweist, die über mindestens einen zweiten Lamellenrandabschnitt (30) zusammengefügt sind, wobei der zusätzliche Vorsprung (17a) mit zwei ersten Lamellenrandabschnitten (20) versehen ist, die über mindestens einen zweiten Lamellenrandabschnitt (30) zusammengefügt sind.

5. Schichtanordnung nach Anspruch 1, **dadurch gekennzeichnet, daß** ein zweiter Lamellenrandabschnitt (30) eines Sitzbereiches (15) eines der Lamellenabschnitte (13) einen Anschlagabschnitt und ein weiterer zweiter Lamellenrandabschnitt (30) des Sitzbereiches (16) des anderen Lamellenabschnittes (14) einen Auflaufabschnitt festlegt, der bei Befestigung der Lamellenabschnitte (13, 14) am Anschlagabschnitt sitzen soll.

6. Schichtanordnung nach Anspruch 5, **dadurch gekennzeichnet, daß** die zweiten Lamellenrandabschnitte (30) der Anschlag- und Anlaufabschnitte zumindest einen Teil der entsprechenden Ausnehmung (18) und des entsprechenden Vorsprungs (17) festlegen.

7. Schichtanordnung nach Anspruch 1, **dadurch gekennzeichnet, daß** ein zweiter Lamellenrandabschnitt (30) eines Sitzbereiches (15) eines der Lamellenabschnitte (13) eine Führungseinrichtung und ein weiterer zweiter Lamellenrandabschnitt (30) des Sitzbereiches (16) des anderen Lamellenabschnittes (14) eine Führungsfolgeeinrichtung festlegt, die beim Befestigen der Lamellenabschnitte (13, 14) in der Führungseinrichtung sitzen soll.

8. Schichtanordnung nach Anspruch 7, **dadurch gekennzeichnet, daß** die zweiten Lamellenrandabschnitte (30) der Führungseinrichtung und der Führungsfolgeeinrichtung zumindest einen Teil der entsprechenden Ausnehmung (18) und des entsprechenden Vorsprungs (17) festlegen.

9. Schichtanordnung nach Anspruch 1, **dadurch gekennzeichnet, daß** die Ausnehmung (18) und der Vorsprung (17) jedes entsprechenden Sitzbereiches (15, 16) nur einen Teil der Breite des entsprechenden Lamellenabschnittes (13, 14) festlegen.

10. Schichtanordnung nach Anspruch 1, **dadurch gekennzeichnet, daß** die Sitzbereiche (15, 16) zweier aneinander zu befestigender Lamellenabschnitte (13, 14) eine Befestigungseinrichtung aufnehmen.

11. Schichtanordnung nach Anspruch 10, **dadurch gekennzeichnet, daß** die Befestigungseinrichtung durch ein klebendes Material festgelegt ist.

## Revendications

1. Empilement annulaire d'éléments en tôle pour former le stator d'un moteur électrique linéaire ayant une bobine tubulaire (6) montée dans l'empilement annulaire des éléments en tôle (10), chaque élément en tôle (10) ayant deux extensions axiales externes (12) et une extension axiale interne (11) définies par deux parties en tôle (13, 14) destinées à être fixées l'une à l'autre de façon à former l'élément en tôle respectif (10), chaque partie en tôle (13,14) présentant une région d'appui respective (15,16) ayant au moins un évidement (18) pour s'ajuster dans et retenir une saillie respective (17) prévue dans la région d'appui (15,16) de l'autre partie en tôle (13,14), dans lequel chaque région d'appui (15,16) a son contour comprenant au moins une première et au moins une seconde parties de bord de tôle (20,30), la première partie de bord de tôle (20) étant disposée selon un alignement qui est au moins sensiblement parallèle à l'alignement axial des parties en tôle (13,14) et la seconde partie de bord de tôle (30) étant liée à la première partie de bord de tôle (20) en formant un angle avec cette dernière, une première partie de bord de tôle (20) d'une partie en tôle (13,14) étant en appui et fixée à une première partie de bord de tôle (20) de l'autre partie en tôle (13,14) lors de la formation de l'élément en tôle respectif (10), et une seconde partie de bord de tôle (30) d'une partie en tôle (13,14) étant fixée à une seconde partie de bord de tôle (30) de l'autre partie en tôle (13,14) lors de la formation de l'élément en tôle respectif (10), la région d'appui (16) présentant au moins un évidement (18) débouchant vers l'extérieur de la partie en tôle respective (14) et un évidement supplémentaire (18a) débouchant vers l'intérieur de l'évidement (18), l'autre région d'appui (15) étant munie d'une saillie (17) et d'une saillie supplémentaire (17a) à ajuster respectivement dans l'évidement (18) et dans l'évidement supplémentaire (18a) qui sont prévus dans l'autre région d'appui (16).

2. Empilement de la manière indiquée dans la revendication 1,
**caractérisé en ce que** l'évidement (18) et l'évidement supplémentaire (18a) ont leurs axes disposés selon le même alignement axial pour l'assemblage des parties en tôle (13,14).

3. Empilement de la manière indiquée dans la revendication 2,
**caractérisé en ce qu'**au moins un évidement (18) et évidement supplémentaire respectif (18a) sont coaxiaux.

4. Empilement de la manière indiquée dans la revendication 1,
**caractérisé en ce que** l'évidement supplémentaire (18a) présente deux premières parties de bord de tôle (20) liées par au moins une seconde partie de bord de tôle (30), la saillie supplémentaire (17a) ayant deux premières parties de bord de tôle (20) liées l'une à l'autre par au moins une seconde partie de bord de tôle (30).

5. Empilement de la manière indiquée dans la revendication 1,
**caractérisé en ce qu'**une seconde partie de bord de tôle (30) d'une région d'appui (15) de l'une des parties en tôle (13) définit une partie d'arrêt et une autre seconde partie de bord de tôle (30) de la région d'appui (16) de l'autre partie en tôle (14) définit une partie de butée destinée à s'appliquer contre ladite partie d'arrêt lors de la fixation des parties en tôle (13,14).

6. Empilement de la manière indiquée dans la revendication 5,
**caractérisé en ce que** les secondes parties de bord de tôle (30) des parties d'arrêt et de butée définissent au moins une partie de l'évidement (18) et de la saillie (17) respectifs.

7. Empilement de la manière indiquée dans la revendication 2,
**caractérisé en ce qu'**une seconde partie de bord de tôle (30) d'une région d'appui (15) de l'une des parties en tôle (13) définit des moyens à guide et une autre seconde partie de bord de tôle (30) de la région d'appui (16) de l'autre partie en tôle (14) définit des moyens de suivi du guide destinés à être montés dans lesdits moyens à guide lors de la fixation des parties en tôle (13,14).

8. Empilement de la manière indiquée dans la revendication 7,
**caractérisé en ce que** les secondes parties de bord de tôle (30) des moyens à guide et des moyens de suivi du guide définissent au moins une partie de l'évidement (18) et de la saillie (17) respectifs.

9. Empilement de la manière indiquée dans la revendication 1,
**caractérisé en ce que** l'évidement (18) et la saillie (17) de chaque région d'appui respective (15,16) occupent seulement une partie de la largeur de la partie en tôle correspondante (13,14).

10. Empilement de la manière indiquée dans la revendication 1,
**caractérisé en ce que** les régions d'appui (15,16) des deux parties en tôle (13,14) à fixer mutuellement reçoivent des moyens de fixation.

11. Empilement de la manière indiquée dans la revendication 10,
**caractérisé en ce que** les moyens de fixation sont définis par une matière adhésive.
